# EUROPÄISCHE PATENTSCHRIFT

(11) **EP 3 074 730 B1**
(45) Veröffentlichungstag und Bekanntmachung des Hinweises auf die Patenterteilung: **27.09.2017**
(21) Anmeldenummer: 14808561.6
(22) Anmeldetag: 27.11.2014
(51) Int. Cl.: G01D 11/24, B29C 45/16, B29L 31/34, B29C 45/14

(54) **SENSORHERSTELLUNG DURCH HALTEN DES ZWISCHENSPRITZLINGS**
METHOD FOR MANUFACTURING A SENSOR BY HOLDING THE INTERMEDIATE INJECTION-MOLDED PART
MÉTHODE DE FABRICATION D'UN CAPTEUR PAR MAINTIEN DE LA PIÈCE MOULÉE PAR INJECTION INTERMÉDIAIRE

(30) Priorität: 28.11.2013 DE 102013224464; 06.05.2014 DE 102014208429
(43) Veröffentlichungstag der Anmeldung: 05.10.2016
(73) Patentinhaber: Continental Teves AG & Co. oHG, 60488 Frankfurt (DE)
(72) Erfinder: FISCHER, Thomas, 65931 Frankfurt am Main (DE); BIEBRICHER, Lothar, 61440 Oberursel (DE); SCHILLINGER, Jakob, 85080 Gaimersheim (DE); HUBER, Dietmar, 63322 Rödermark (DE); SCHULMEISTER, Michael, 64846 Groß-Zimmern (DE); GÜNTHNER, Stefan, 60439 Frankfurt am Main (DE)
(86) Internationale Anmeldenummer: PCT/EP2014/075790
(87) Internationale Veröffentlichungsnummer: WO 2015/078958

(56) Entgegenhaltungen:
- EP-A1- 1 634 687
- DE-A1-102006 008 478
- DE-A1-102011 121 412
- US-A1- 2008 006 440
- US-A1- 2008 187 614

## Beschreibung

Die Erfindung betrifft ein Verfahren zum Herstellen einer elektronischen Baugruppe und eine elektronische Baugruppe.

Aus der WO 2010 / 037 810 A1 ist eine elektronische Vorrichtung in Form eines Sensors zum Ausgeben eines elektrischen Signals bekannt, dass von einer physikalischen Größe abhängig ist, die über ein physikalisches Feld basierend auf einem Messaufnehmer erfasst wird. Aus den DE 10 2011 121 412 A1 und US2008/006440 A1 sind Sensoren bekannt, die mittels Zwei-Komponenten-Spritzguss-Verfahren hergestellt sind. Es ist Aufgabe der vorliegenden Erfindung die bekannte elektronische Baugruppe zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Herstellen einer elektronischen Vorrichtung die Schritte Ummanteln einer elektronischen Baugruppe mit einem ersten Mantelmaterial, Halten der mit dem ersten Mantelmaterial ummantelten elektronischen Baugruppe über ein Halteelement, derart, dass das Halteelement von der elektronischen Baugruppe über das Mantelmaterial beabstandet ist, und Ummanteln der an dem Halteelement gehaltenen Baugruppe mit einem zweiten Mantelmaterial.

Dem angegebenen Verfahren liegt die Überlegung zugrunde, dass die elektronische Baugruppe zumindest von einem der beiden Mantelmaterialen vollständig umhüllt sein müssen, damit beide Elemente vor Feuchtigkeit und anderen verwitternd wirkenden Einflüssen geschützt sind. Zum Umhüllen der elektronischen Baugruppe könnte diese in einen sogenannten Carrier eingelegt werden, der dann beispielsweise mit einem einzigen Mantelmaterial ausgespritzt wird. Ein derartiger Carrier muss jedoch extra hergestellt werden und weißt grundsätzlich ein Halteelement auf, dass in der Regel nach dem Herstellen der elektronischen Baugruppe abgebrochen werden muss. Hierbei besteht eine nicht zu unterschätzende Gefahr, dass die durch das Mantelmaterial beabsichtigte Dichtwirkung zerstört wird. Zudem muss der Carrier eigens geschaffen werden, was entsprechend kostenaufwändig ist.

Im Rahmen des angegebenen Verfahrens wird daher ein anderer Weg gegangen. Hier wird die elektronische Baugruppe in einem ersten Schritt mit dem ersten Mantelmaterial ummantelt. Dabei braucht keine Rücksicht darauf genommen zu werden, ob das erste Mantelmaterial die elektronische Baugruppe tatsächlich dicht ummantelt oder nicht. Sie dient vielmehr als Auflage für ein Halteelement, an dem das Zwischenprodukt der zu fertigenden elektronischen Vorrichtung beim Ummanteln mit dem zweiten Mantelmaterial gehalten wird. In diesem Zustand kann die elektronische Vorrichtung mit dem zweiten Mantelmaterial beständig gegen Witterungseinflüsse wie Feuchtigkeit abgedichtet werden.

In einer Weiterbildung des angegebenen Verfahrens wird ein Labyrinthelement genanntes Formschlusselement auf dem ersten Mantelmaterial ausgebildet, das nach dem Ummanteln mit dem zweiten Mantelmaterial zwischen dem ersten Mantelmaterial und dem zweiten Mantelmaterial einen Labyrinthspalt ausbildet. In der Regel kann die elektronische Vorrichtung nicht vollständig von dem zweiten Mantelmaterial ummantelt werden, weil beispielsweise Stelle offengehalten werden müssen, an denen ein elektrischer Anschluss für die elektronische Baugruppe bereitgehalten werden muss.

Der schlussendlich gebildete Labyrinthspalt kann beliebig ausgeführt sein, und soll die Funktion einer an sich bekannten Labyrinthdichtung, auch Spaltdichtung genannt erfüllen. Dabei handelt es sich um eine berührungsfreie Wellendichtung. Die Dichtwirkung beruht auf strömungstechnischen Effekten durch die Verlängerung des abzudichtenden Spaltes. Dadurch wird der Strömungswiderstand erhöht. Die Wegverlängerung wird in der Regel durch ein Ineinandergreifen (Fachausdruck "Verkämmung") von Formelementen auf der Welle und dem feststehenden Gehäuseteil erreicht.

In einer zusätzlichen Weiterbildung des angegebenen Verfahrend wird das Labyrinthelement umlaufend um einen Haltebereich ausgebildet, in dem das Halteelement zum Halten der mit dem ersten Mantelmaterial ummantelten elektronischen Baugruppe angesetzt wird. Beim Ummanteln des ersten Mantelmaterials mit dem zweiten Mantelmaterial kann das erste Mantelmaterial prinzipbedingt an der Stelle nicht ummantelt werden, an der das oben genannte Zwischenprodukt mit dem Halteelement am ersten Mantelmaterial gehalten wird. Um hier einen hohen Schutz vor eintretender Feuchtigkeit zu bieten, wird vorgeschlagen, den zuvor erwähnten Labyrinthspalt vor allem in diesem Bereich auszubilden.

In einer besonderen Weiterbildung des angegebenen Verfahrens sind das erste Mantelmaterial und das zweite Mantelmaterial derart ausgebildet, dass das zweite Mantelmaterial beim Ummanteln des ersten Mantelmaterials dieses bereichsweise aufschmilzt. Auf diese Weise können sich das erste Mantelmaterial und das zweite Mantelmaterial miteinander stoffschlüssig verbinden und den zuvor genannten Spalt zwischen den beiden Mantelmaterialien zumindest teilweise schließen.

Hierfür kann in einer besonders bevorzugten Ausbildung des angegebenen Verfahrens eine Schmelzrippe auf dem ersten Mantelmaterial ausgebildet werden, die beim Ummanteln mit dem zweiten Mantelmaterial bereichsweise aufgescholzen wird. Diese Schmelzrippe kann beispielsweise das oben genannte Labyrinthelement sein.

In einer anderen Weiterbildung umfasst das angegebene Verfahren den Schritt Ausbilden eines Aufnahmeelement genannten Formschlusselementes auf dem ersten Mantelmaterial, das eingerichtet ist, das Halteelement wenigstens formschlüssig aufzunehmen. Daneben könnte das Halteelement in dem Aufnahmeelement aber auch kraftschlüssig oder sogar stoffschlüssig gehalten werden. Das Aufnahmeelement erhöht beim Halten des oben genannten Zwischenproduktes mit dem Halteelement die Stabilität des Halteelementes und ermöglicht so eine präzise und beständige Positionierung.

In einer zusätzlichen Weiterbildung des angegebenen Verfahrens wird das Halteelement nach dem Ummanteln der elektronischen Baugruppe mit dem ersten Mantelmaterial in das Aufnahmeelement eingeführt. Auf diese Weise ist sichergestellt, dass das Halteelement auf dem ersten Mantelmaterial und nicht auf der elektronischen Baugruppe aufliegt, die auf diese Weise wirksam gegenüber Feuchtigkeit abgedichtet ist.

In einer noch anderen Weiterbildung des angegebenen Verfahrens weist die elektronische Baugruppe einen elektrischen Anschluss zum elektrischen Kontaktieren, an der die elektronische Baugruppe beim Ummanteln mit dem ersten Mantelmaterial und dem zweiten Mantelmaterial gehalten wird. Über diesen elektronischen Anschluss kann die elektronische Vorrichtung bei ihrer Ummantelung weiter stabilisiert werden.

In einer bevorzugten Weiterbildung umfasst das angegebene Verfahren die Schritte Anordnen eines Befestigungselementes neben der mit dem ersten Mantelmaterial ummantelten elektronischen Baugruppe, und Ummanteln der mit dem ersten Mantelmaterial ummantelten elektronischen Baugruppe und des Befestigungselementes mit dem zweiten Mantelmaterial. Über dieses Befestigungselement kann die elektronische Baugruppe an einem übergeordneten Gerät, wie beispielsweise einem Fahrzeug befestigt werden. Besonders günstig an dieser Weiterbildung ist, dass die beiden Mantelmaterialien die elektronische Baugruppe bei einer geeigneten Materialwahl, die elektronische Baugruppe gegenüber dem übergeordneten Gerät mechanisch entkoppeln können. Dazu sollten die beiden Materialien so elastisch wie möglich gewählt werden.

Gemäß einem weiteren Aspekt der Erfindung ist eine elektronische Vorrichtung mit einem der angegebenen Verfahren hergestellt. Die elektronische Vorrichtung ist vorzugsweise ein Sensor. Dieser Sensor umfasst besonders bevorzugt einen Messaufnehmer, der eingerichtet ist, ein von einer zu messenden Größe abhängiges Geberfeld zu erfassen und ein von dem Geberfeld abhängiges Messsignal auszugeben. Das Messsignal kann dann direkt oder über eine Signalverarbeitungsschaltung aufgearbeitet über ein Kabel an eine übergeordnete Steuereinrichtung ausgegeben werden. Das Geberfeld kann dabei ein Kraftfeld oder ein Magnetfeld sein.

Besonders bevorzugt ist der Sensor ein Inertialsensor oder ein Drehzahlsensor, die in einem Fahrzeug verbaut werden können.

Gemäß einem weiteren Aspekt der Erfindung umfasst ein Fahrzeug wenigstens einen der zuvor genannten Sensoren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Ansicht eines Drehzahlsensors in dem Fahrzeug der Fig. 1,
Fig. 3 eine schematische Ansicht eines Inertialsensors in dem Fahrzeug der Fig. 1,
Fig. 4 eine schematische Ansicht einer elektronischen Baugruppe in dem Inertialsensor der Fig. 1,
Fig. 5 eine schematische Ansicht einer alternativen elektronischen Baugruppe in dem Inertialsensor der Fig. 1
Fig. 6 eine schematische Ansicht eines Zwischenprodukts des Inertialsensors der Fig. 1, und
Fig. 7 eine schematische Ansicht des Inertialsensors der Fig. 1 zeigen.

In den Figuren werden gleiche technische Elemente mit gleichen Bezugszeichen versehen und nur einmal beschrieben.

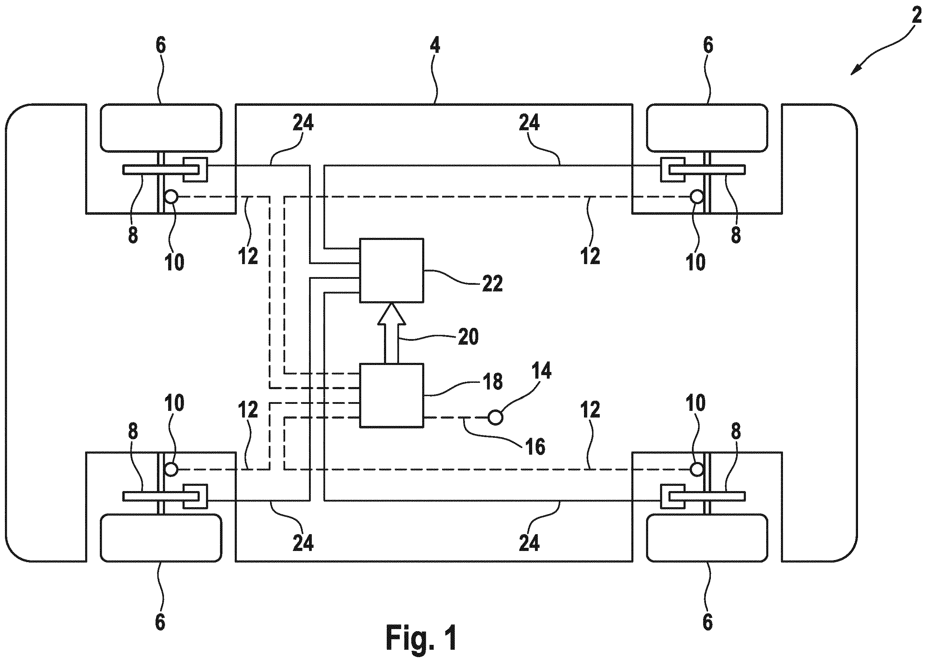

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass das die Räder 6 des Fahrzeugs 2 ihre Bodenhaftung verlieren und sich das Fahrzeug 2 sogar von einer beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

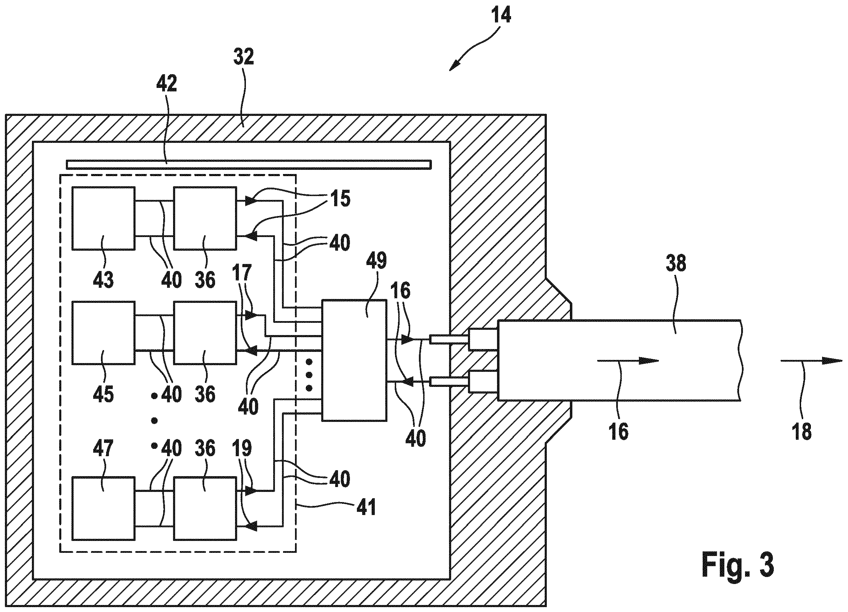

In der vorliegenden Ausführung weist das Fahrzeug 2 dafür Drehzahlsensoren 10 an den Rädern 6 auf, die eine Drehzahl 12 der Räder 6 erfassen. Ferner weist das Fahrzeug 2 einen Inertialsensor 14 auf, der Fahrdynamidaten 16 des Fahrzeuges 2 erfasst aus denen beispielsweise eine Nickrate, eine Wankrate, eine in Fig. 3 angedeutete Gierrate 15, eine in Fig. 3 angedeutete Querbeschleunigung 17, eine in Fig. 3 angedeutete Längsbeschleunigung 19 und/oder eine Vertikalbeschleunigung in einer dem Fachmann an sich bekannten Weise ausgegeben werden kann. Zur Realisierung der Fahrdynamikregelung sind beispielsweise die Erfassung der Gierrate 15 und der Querbeschleunigung 17 notwendig.

Basierend auf den erfassten Drehzahlen 12 und Fahrdynamikdaten 16 kann ein Regler 18 in einer dem Fachmann bekannten Weise bestimmen, ob das Fahrzeug 2 auf der Fahrbahn rutscht oder sogar von der oben genannten vorgegebenen Trajektorie abweicht und entsprechen mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

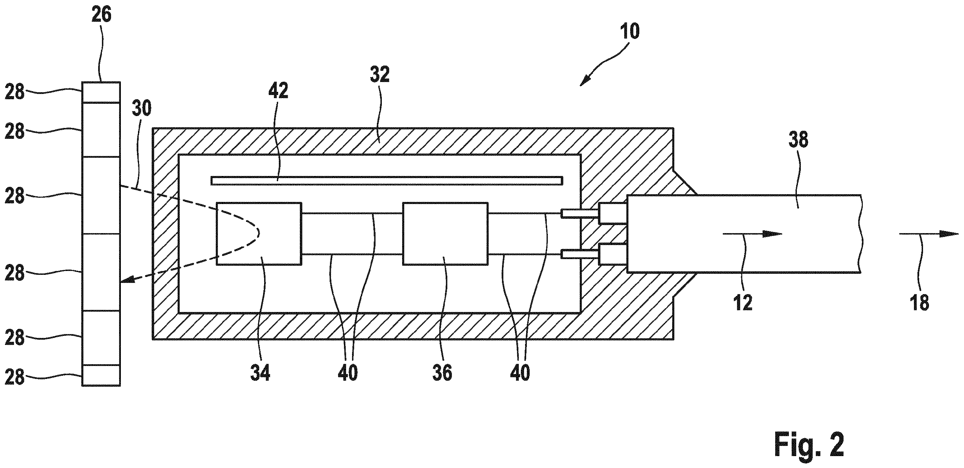

Es wird auf Fig. 2 Bezug genommen, die eine schematische Ansicht des Drehzahlsensors 10 in dem Fahrzeug 2 der Fig. 1 zeigt.

Der Drehzahlsensor 10 ist in der vorliegenden Ausführung als aktiver Drehzahlsensor 10 ausgeführt, im Rahmen dessen ein von einer drehfest mit einem der Räder 6 verbundenen Encoderscheibe 26, die aus einer Vielzahl von Magnetpolen 28 zusammengesetzt ist, ein Magnetfeld 30 abgegeben wird. Das Magnetfeld 30 durchdringt einen in einem Gehäuse 32 eingehausten Messaufnehmer 34, der über eine Signalaufbereitsschaltung 36 an ein Datenkabel 38 angeschlossen ist, über das die Drehzahl 12 an den Regler 18 übertragen werden kann. Dabei können der Messaufnehmer 34, die Signalaufbereitungsschaltung 36 und das Datenkabel 38 über Verdrahtungen 40, beispielsweise in Form eines Leadframes miteinander verdrahtet sein. Um die elektromagnetische Verträglichkeit des Drehzahlsensors 10 zu erhöhen, kann ein Abschirmblech 42 angeordnet sein.

Weitere Hintergrundinformationen zu aktiven Drehzahlsensoren können beispielsweise der DE 101 46 949 A1 entnommen werden.

Es wird auf Fig. 3 Bezug genommen, die eine schematische Ansicht des Inertialsensors 14 aus Fig. 1 zeigt.

Für die in Fig. 1 erläuterte Fahrdynamikregelung muss, wie beispielsweise in der DE 10 2006 053 308 A1 ausgeführt, mindestens die Gierrate 15 erfasst werden. Auch die Erfassung der Querbeschleunigung 17 ist im Rahmen der Fahrdynamikregelung sinnvoll. Jedoch können mit dem Inertialsensor 14 applikationsabhängig Drehraten und Beschleunigungen in beliebigen Raumrichtungen erfasst werden. Dabei soll nachstehend der Übersichtlichkeit halber angenommen werden, dass für jede Drehrate und für jede Beschleunigung ein eigener Messaufnehmer notwendig ist, wobei die einzelnen Messaufnehmer in dem Inertialsensor 14 der Fig. 3 zu einem Sensorcluster 41 zusammengefasst sind.

Der Inertialsensor 14 der Fig. 3 soll beispielhaft als sechsachsiger Inertialsensor ausgebildet sein, der in der Lage ist, die Drehraten und Beschleunigungen in allen drei Raumrichtungen zu erfassen. Hierzu müsste der Sensorcluster 41 unter der zuvor genannten Voraussetzung sechs verschiedene Messaufnehmer umfassen. Der Übersichtlichkeit halber sind in Fig. 3 jedoch nur drei der Messaufnehmer in dem Sensorcluster 41 dargestellt, und zwar im Einzelnen ein Gierratenmessaufnehmer 43, einen Querbeschleunigungsmessaufnehmer 45 und einen Längsbeschleunigungsmessaufnehmer 47.

Jeder der Messaufnehmer 43, 45, 47 ist über Verdrahtungen 40 an eine eigene Signalaufbereitungsschaltung 36 angeschlossen, über die der jeweilige Messaufnehmer 43, 45, 47 an die jeweilige Signalaufbereitungsschaltung 36 ein nicht weiter indiziertes von der jeweiligen zu erfassenden Messgröße 15, 17, 19 abhängiges Messsignal ausgibt.

Die einzelnen Signalaufbereitungsschaltungen 36 in dem Inertialsensor 14 bestimmen aus dem jeweils empfangenen Messsignal aus den einzelnen Messaufnehmern 43, 45, 47 die jeweilige Messgröße 15, 17, 19 und geben sie als digitale Daten über Verdrahtungen an eine Datenschnittstelle 49 aus.

Die Datenschnittstelle 49 moduliert die empfangenen digitalen Daten dann gemäß einem bestimmten Muster und überträgt sie als die Fahrdynamikdaten 16 an den Regler 18. Das Modulationsmuster hängt dabei von der verwendeten Schnittstelle ab. Im Automobilbereich sind verschiedene Schnittstellen gängig, wie beispielsweise eine Schnittstelle zu einem Controller Area Network Bus, CAN-Bus genannt. Sensordaten, wie die Messgrößen 15, 17, 19 aus dem Inertialsensor 14 können jedoch in besonders effizienter Weise mit einer sogenannten Peripheral Sensor Interface 5 Schnittstelle, PSI5-Schnittstelle genannt, über eine Zweidrahtleitung als Datenkabel 38 an den Regler übertragen werden, weshalb die Datenschnittstelle 49 in besonders günstiger Weise als PSI5-Schnittstelle 49 ausgebildet sein kann. Nähere Informationen hierzu können dem einschlägigen Standard entnommen werden.

Anhand des in Fig. 1 und 3 gezeigten Inertialsensors 14 soll die vorliegende Erfindung näher verdeutlicht werden, auch wenn die vorliegende Erfindung an beliebigen elektronischen Vorrichtungen und insbesondere an beliebigen Sensoren, wie den Drehzahlsensoren 10, Magnetfeldsensoren, Körperschallsensoren oder Temperatursensoren umsetzbar ist.

Im Einsatz in dem zuvor genannten Fahrzeug 2 ist es für eine hohe Langlebigkeit des Inertialsensors 14 besonders wichtig, möglichst dicht gegen eindringende Feuchtigkeit zu sein. Gerade weil der Inertialsensor 14 am Rad 6 verbaut ist, das während der Fahrt des Fahrzeuges 2 eine nicht unerhebliche Menge an Schmutz und Feuchtigkeit aufschleudern kann, kommt der Abdichtung gegenüber eindringender Feuchtigkeit eine sehr hohe Bedeutung zu, die vermeidet, dass beispielsweise die Verdrahtung 40 korrodiert und zu einer unterbrochen wird.

Um dies zu erreichen, wird die, den Sensorcluster 41 und die PSI5-Schnittstelle 49 umfassende elektronische Baugruppe 44 des Inertialsensors 14 in der nachstehenden Weise ummantelt.

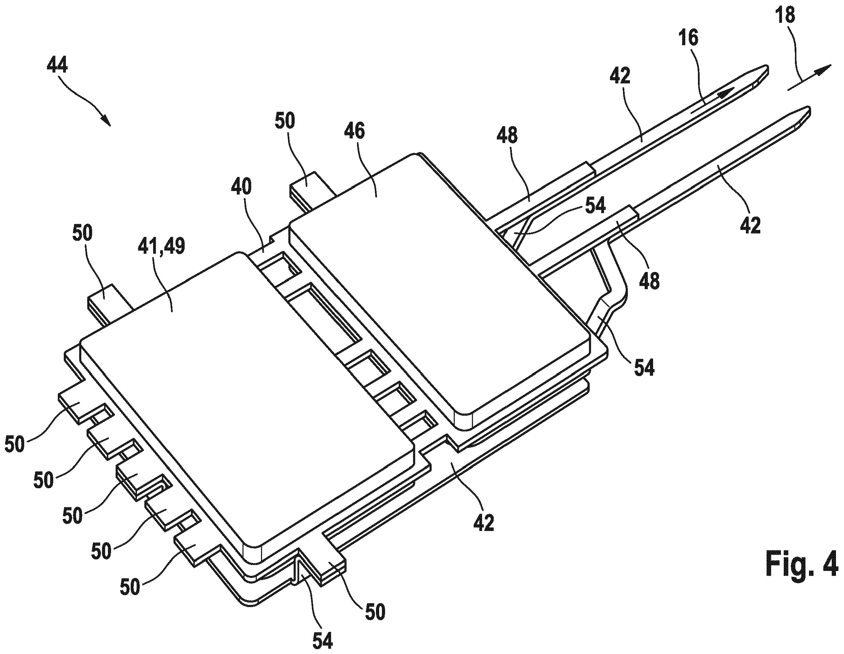

Die elektronische Baugruppe 44 ist in Fig. 4 dargestellt. In dieser können der Sensorcluster 41 und die PSI5-Schnittstelle 49 auf einer gemeinsamen integrierten Schaltung angeordnet sein. Die elektronische Baugruppe 44 kann ferner noch einen Schutzkondensator 46 umfassen, der den Sensorcluster 41 und die PSI5-Schnittstelle 49 beispielsweise vor einer eventuellen Überspannung schützt.

Als Verdrahtung 40 wurde im vorliegenden Ausführungsbeispiel in nicht einschränkender Weise ein Leadframe gewählt, von dem zwei Kontaktpins 48 und eine Anzahl an überstehender Bereiche in Form von Haltepins 50 abragen.

Während auf die Haltepins 50 an späterer Stelle näher eingegangen wird, sind die Kontaktpins 48 an Steckerpins 52 elektrisch angeschlossen, an die wiederrum das Datenkabel 38 angeschlossen werden kann, um, wie in Fig. 2 angedeutet, die Drehzahl 12 an den Regler 18 zu senden.

Vom Abschirmbleich 42 ragen, in der Ebene des Abschirmblechs 42 gesehen, Trageelemente 54 ab. Diese sind einstückig mit den Steckerpins 42 ausgebildet und mit der als Leadframe ausgeführten Verdrahtung 40 an den Kontaktpins 48 und an einer den Kontaktpins 48 gegenüberliegenden Seite elektrisch und mechanisch verbunden.

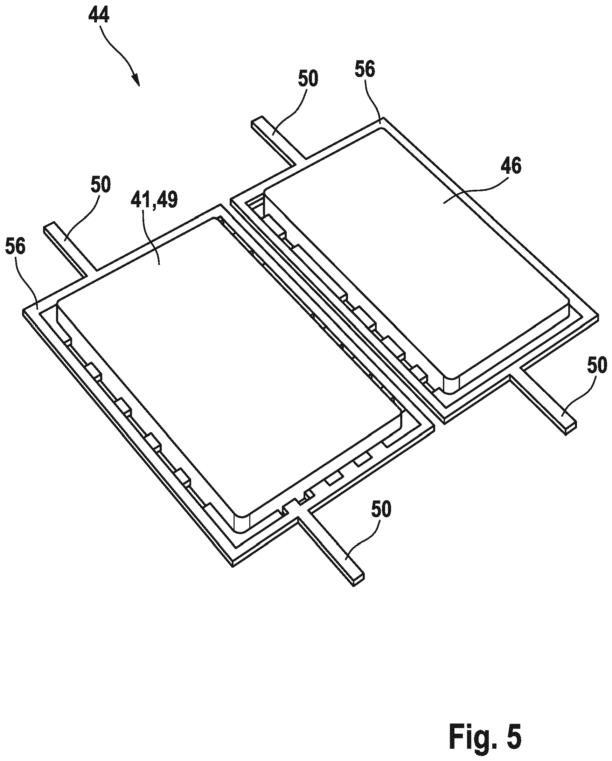

Die Haltepins 50 können im Prinzip beliebig ausgeführt sein. Wie beispielsweise in Fig. 5 dargestellt, können die Haltepins 50 auch an gemeinsame Rahmen 56 anschließen, die entsprechend die integrierte Schaltung mit dem Sensorcluster 41 und der PSI5-Schnittstelle 49 sowie den Schutzkondensator 46 umschließen können. Die Oberfläche der Haltepins 50 kann dabei beliebig ausgebildet sein. Um die nachstehend erläuterte Funktion optimal auszuführen, sollten die Haltepins 50 und/oder der Rahmen 56 mit Rillen, Prägungen oder dergleichen strukturiert sein. Ferner können diese auch mit Einschnürungen oder Bohrungen versehen sein. Prinzipiell ist die Form der Haltepins 50 und/oder der Rahmen 56 jedoch beliebig.

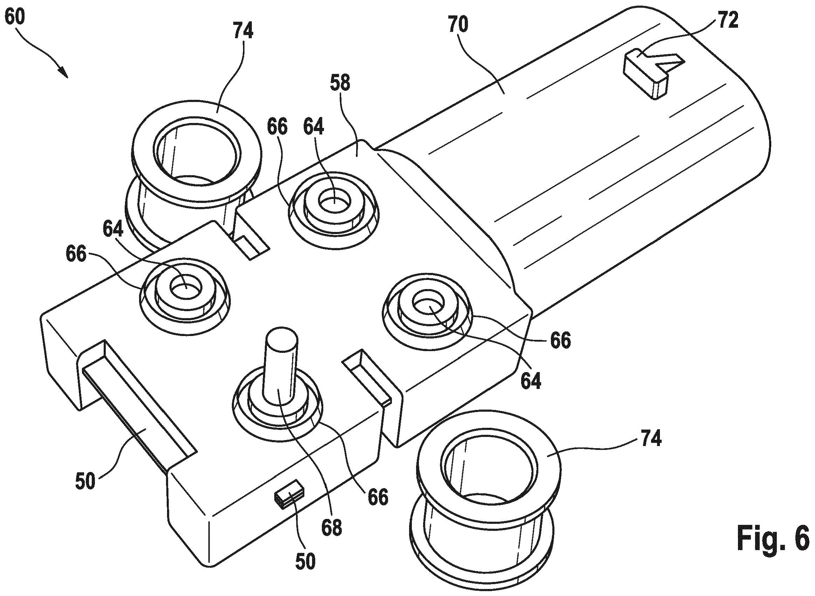

Zum Ummanteln der elektronischen Baugruppe 44 wird diese an den Haltepins 50 und an den Steckerpins 42 mit einem nicht näher dargestellten Werkzeug gehalten. Dann erfolgt eine erste Ummantelung mit einem ersten, in Fig. 6 dargestellten Mantelmaterial 58 beispielsweise durch ein Urformungsverfahren wie dem Spritzguss. Dazu kann die elektronische Baugruppe 44 in eine nicht weiter dargestellte Gussform eingelegt werden. In diese Gussform wird das erste Mantelmaterial 58 eingespritzt, so dass es die in Fig. 6 gezeigte Form annehmen kann.

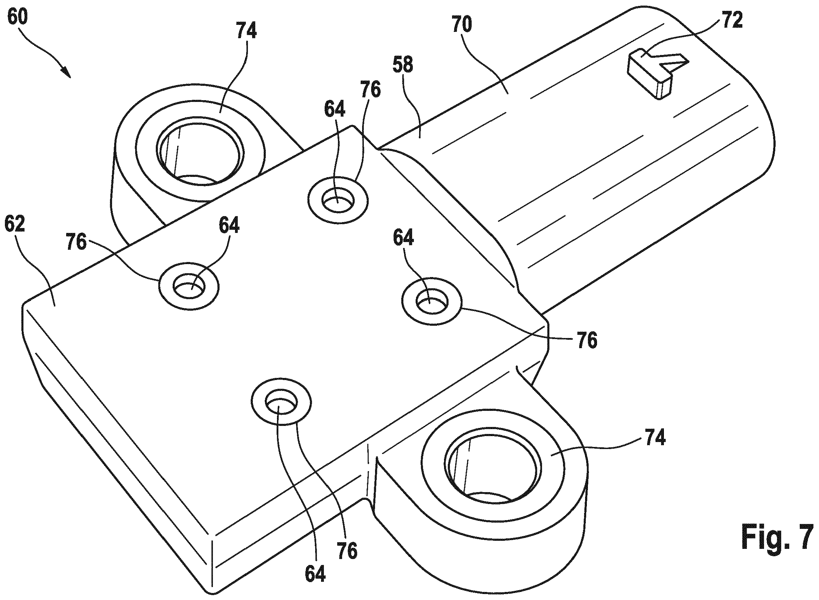

Das die elektronische Baugruppe 44 in der Gussform an wenigstens einer Stelle aufliegen muss, weist das in Fig. 6 zu sehende Zwischenprodukt 60, auch Vorumspritzling genannt, an den Haltepins 50 exponierte Stellen auf, über die prinzipiell Feuchtigkeit zur elektronischen Baugruppe 44 eindringen könnte. Um dies zu vermeiden, wird das Zwischenprodukt 60 im Rahmen der vorliegenden Ausführung mit einem später in Fig. 7 zu sehenden zweiten Ummantelungsmaterial 62 ummantelt.

Um diese zweite Ummantelung besonders effektiv durchzuführen, werden in dem ersten Ummantelungsmaterial 58 im Rahmen der vorliegenden Ausführung vier Aufnahmeelemente 64 ausgebildet, die je von einem Labyrintelement 66 umgeben sind. In diese Aufnahmeelemente 64 können je ein Halteelement 68 eingesetzt werden, von denen in Fig. 7 der Übersichtlichkeit halber nur eines dargestellt ist. Die Aufnahmeelemente 64 dienen daher als Haltebereiche für die Halteelemente 68. Auf diese Halteelemente 68 wird an späterer Stelle näher eingegangen.

Um auch das an die Steckerpins 42 angeschlossene Datenkabel 38 vor eindringender Feuchtigkeit zu schützen, sind die in Fig. 6 nicht zu sehenden Steckerpins 42 von einem Steckergehäuse 70 umgeben, in das ein am Datenkabel 38 angeschlossener, in den Figuren nicht weiter dargestellter Stecker formschlüssig eingeführt werden kann. Am Steckergehäuse 70 ist ferner ein Rastelement 72 ausgebildet, an dem der Stecker mit dem Steckergehäuse 70 mit einem entsprechenden Rastelement verrastet werden kann.

Vor dem Ummanteln mit dem zweiten Mantelmaterial 62 werden im Rahmen der vorliegenden Ausführung neben dem ersten Mantelmaterial 58 Befestigungselemente 74 in Form von Buchsen angeordnet. Dabei kann das Zwischenprodukt 60 wieder in einer entsprechenden, in Fig. 6 nicht zu sehenden Gussform aufgenommen und darin an den Halteelementen 68 gehalten werden. Dabei können die Halteelemente 68 auch Teil dieser Gussform sein.

Die Halteelemente 68 liegen auf dem ersten Mantelmaterial 58 auf und haben keinen direkten Kontakt zur elektronischen Baugruppe 44. Wird das in der weiteren Gussform gehaltene Zwischenprodukt 60 daher mit dem zweiten Mantelmaterial 62 ummantelt, dann bilden das erste Mantelmaterial 58 und das zweite Mantelmaterial 62 einen in Fig. 7 angedeuteten Labyrinthspalt 76 aus, der sich ausgehend von den Aufnahmeelementen 64 über die Labyrintelemente 66 und die Oberfläche des ersten Mantelmaterials 58 bis hin zu den Haltepins 50 erstreckt. Erst dort kann eventuell eindringende Feuchtigkeit mit der elektronischen Baugruppe 44 in Kontakt kommen und diese korrodieren.

Die Labyrinthelemente 66 verlängern dabei den Labyrinthspalt 76 weiter, wobei selbstverständlich mehrere konzentrisch zueinander angeordnete Labyrinthelemente 66 den Labyrinthspalt 76 weiter verlängern können.

Um den Labyrinthspalt 76 teilweise zu schließen, können beispielsweise die Labyrinthelemente 66 als Schmelzrippen ausgebildet sein. Das heißt, dass an dieser Stelle beim Ummanteln mit dem zweiten Mantelmaterial 62 das ersten Mantelmaterial 58 aufschmilzt und sich mit dem zweiten Mantelmaterial 62 verbindet. Auf diese Weise wird der Labyrinthspalt 76 stoffschlüssig verschlossen. Alternativ könnten die Labyrintelemente 66 selbstverständlich auch als Nuten ausgebildet werden.

Nach dem Ummanteln mit dem zweiten Mantelmaterial 62 könnten die Halteelemente 68 aus dem Aufnahmeelementen 64 wieder entfernt werden, falls dies gewünscht ist.

Als erstes Mantelmaterial 58 und als zweites Mantelmaterial 62 sollte ein gegenüber Witterung beständiges Material beispielsweise in Form eines Kunststoffes gewählt werden. Dabei kann beispielsweise für jedes der beiden Mantelmaterialien aus den Materialien Thermoplast, Duroplast und Elastomere eine beliebige Kombination ausgewählt werden.

## Patentansprüche

1. Verfahren zum Herstellen einer elektronischen Vorrichtung (10), umfassend:
- Ummanteln einer elektronischen Baugruppe (44) mit einem ersten Mantelmaterial (58),
- Ausbilden eines Aufnahmeelement (64) genannten Formschlusselementes auf dem ersten Mantelmaterial (58), das eingerichtet ist, ein Halteelement (68) wenigstens formschlüssig aufzunehmen,
- Halten der mit dem ersten Mantelmaterial (58) ummantelten elektronischen Baugruppe (44) über das Halteelement (68), derart, dass das Halteelement (68) von der elektronischen Baugruppe (44) über das erste Mantelmaterial (58) beabstandet ist, und
- Ummanteln der an dem Halteelement (68) gehaltenen Baugruppe (44) mit einem zweiten Mantelmaterial (62).

2. Verfahren nach Anspruch 1, umfassend:
- Ausbilden eines Labyrinthelement (66) genannten Formschlusselementes auf dem ersten Mantelmaterial (58), das nach dem Ummanteln mit dem zweiten Mantelmaterial (62) zwischen dem ersten Mantelmaterial (58) und dem zweiten Mantelmaterial (62) einen Labyrintspalt (76) ausbildet.

3. Verfahren nach Anspruch 2, wobei das Labyrinthelement (66) umlaufend um einen Haltebereich (64) ausgebildet wird, in dem das Halteelement (68) zum Halten der mit dem ersten Mantelmaterial (62) ummantelten elektronischen Baugruppe (44) angesetzt wird.

4. Verfahren nach einem der vorstehenden Ansprüche, wobei das erste Mantelmaterial (58) und das zweite Mantelmaterial (62) derart ausgebildet sind, dass das zweite Mantelmaterial (62) beim Ummanteln des ersten Mantelmaterials (58) dieses bereichsweise aufschmilzt.

5. Verfahren nach Anspruch 4, umfassend Ausbilden einer Schmelzrippe auf dem ersten Mantelmaterial (58), die beim Ummanteln mit dem zweiten Mantelmaterial (62) bereichsweise aufgeschmolzen wird.

6. Verfahren nach Anspruch 4, wobei das Halteelement (68) nach dem Ummanteln der elektronischen Baugruppe (44) mit dem ersten Mantelmaterial (58) in das Aufnahmeelement (64) eingeführt wird.

7. Verfahren nach einem der vorstehenden Ansprüche, wobei die elektronische Baugruppe (44) einen elektrischen Anschluss (42) zum elektrischen Kontaktieren aufweist, an der die elektronische Baugruppe (44) beim Ummanteln mit dem ersten Mantelmaterial (58) und/oder dem zweiten Mantelmaterial (62) gehalten wird.

8. Verfahren nach einem der vorstehenden Ansprüche, umfassend:
- Anordnen eines Befestigungselementes (74) neben der mit dem ersten Mantelmaterial (58) ummantelten elektronischen Baugruppe (44), und
- Ummanteln der mit dem ersten Mantelmaterial (58) ummantelten elektronischen Baugruppe (44) und des Befestigungselementes (74) mit dem zweiten Mantelmaterial (62).

9. Elektronische Vorrichtung (10), insbesondere Sensor, die die durch ein Verfahren nach einem der vorhergehenden Ansprüche hergestellt ist.

## Claims

1. Method for producing an electronic device (10), comprising:
- encasing an electronic assembly (44) with a first casing material (58),
- forming a tight fit element called receiving element (64) on the first casing material (58), which is adapted to receive a holding element (68) at least positively,
- holding the electronic assembly (44) encased by the first casing material (58) by means of the holding element (68) in such a manner that the holding element (68) is spaced apart from the electronic assembly (44) above the first casing material (58), and
- encasing the assembly (44) held on the holding element (68) with a second casing material (62).

2. Method according to Claim 1, comprising:
- forming a tight fit element called labyrinth element (66) on the first casing material (58), which after the encasing by the second casing material (62) forms a labyrinth gap (76) between the first casing material (58) and the second casing material (62).

3. Method according to Claim 2, wherein the labyrinth element (66) is configured to run around a holding region (64), in which the holding element (64) for holding the electronic assembly (44) encased by the first casing material (58) is set.

4. Method according to any one of the preceding claims, wherein the first casing material (58) and the second casing material (62) are configured in such a manner that during the encasing of the first casing material (58), the second casing material (62) fuses this in certain regions.

5. Method according to Claim 4, comprising forming a melting rib on the first casing material (58), which is fused in certain regions during encasing by the second casing material (62).

6. Method according to Claim 4, wherein after encasing the electronic assembly (44) by the first casing material (58), the holding element (68) is introduced into the receiving element (64).

7. Method according to any one of the preceding claims, wherein the electronic assembly (44) has an electrical connection (42) for electrical contacting, on which the electronic assembly (44) is held during encasing by the first casing material (58) and/or by the second casing material (62).

8. Method according to any one of the preceding claims, comprising:
- arranging a fastening element (74) next to the electronic assembly (44) encased by the first casing material (58), and
- encasing the electronic assembly (44) encased by the first casing material (58) and the fastening element (74) by the second casing material (62).

9. Electronic device (10), in particular sensor, which is produced by a method according to any one of the preceding claims.

## Revendications

1. Procédé de fabrication d'une électronique dispositif (10), comprenant :
- gainer un module électronique (44) avec un premier matériau de gainage (58),
- réaliser un élément de réception (64) ou élément à complémentarité de forme sur le premier matériau de gainage (58), qui est conçu pour recevoir au moins par complémentarité de forme un élément de maintien (68),
- maintenir module électronique (44) gainé avec le premier matériau de gainage (58) par l'intermédiaire de l'élément de maintien (68), de manière à ce que l'élément de maintien (68) soit espacé du module électronique (44) par l'intermédiaire du premier matériau de gainage (58), et
- gainer le module (44) maintenu sur l'élément de maintien (68) avec un deuxième matériau de gainage (62) .

2. Procédé selon la revendication 1, consistant à :
- réaliser un élément en labyrinthe (66), ou élément à complémentarité de forme, sur le premier matériau de gainage (58) qui, après le gainage avec le deuxième matériau de gainage (62), forme une fente en forme de labyrinthe (76) entre le premier matériau de gainage (58) et le deuxième matériau de gainage (62).

3. Procédé selon la revendication 2, dans lequel l'élément en labyrinthe (66) est réalisé circonférentiellement autour d'une zone de maintien (64), en faisant en sorte que l'élément de maintien (68) soit mis en place de manière à maintenir le module électronique (44) gainé avec le premier matériau de gainage (62).

4. Procédé selon l'une quelconque des revendications précédentes, dans lequel le premier matériau de gainage (58) et le deuxième matériau de gainage (62) sont réalisés de manière à ce que le deuxième matériau de gainage (62) fonde localement sur celui-ci lors du gainage du premier matériau de gainage (58) .

5. Procédé selon la revendication 4, consistant à réaliser une nervure de fusion sur le premier matériau de gainage (58), qui est fondue localement lors du gainage avec le deuxième matériau de gainage (62).

6. Procédé selon la revendication 4, dans lequel l'élément de maintien (68) est introduit dans l'élément de réception (64) après le gainage du module électronique (44) avec le premier matériau de gainage (58) .

7. Procédé selon l'une quelconque des revendications précédentes, dans lequel le module électronique (44) comporte un raccordement électrique (42) destiné à établir un contact électrique sur lequel le module électronique (44) est maintenu lors du gainage avec le premier matériau de gainage (58) et/ou le deuxième matériau de gainage (62).

8. Procédé selon l'une quelconque des revendications précédentes, consistant à :
- disposer un élément de fixation (74) à côté du module électronique (44) gainé avec le premier matériau de gainage (58), et
- gainer le module électronique (44) gainé avec le premier matériau de gainage (58) et gainer l'élément de fixation (74) avec le deuxième matériau de gainage (62) .

9. Dispositif électronique (10), notamment capteur, qui est fabriqué par un procédé selon l'une quelconque des revendications précédentes.
